Europäisches Patentamt

European Patent Office

Office européen des brevets

(11) Publication number: **0 058 441**

**B1**

# EUROPEAN PATENT SPECIFICATION

(45) Date of publication of patent specification: **24.07.85**

(51) Int. Cl.⁴: **B 01 J 2/08** // C01B33/14

(21) Application number: **82200077.4**

(22) Date of filing: **22.01.82**

(54) **Apparatus for the preparation of globular particles of uniform shape.**

(30) Priority: **13.02.81 GB 8104631**

(43) Date of publication of application:
**25.08.82 Bulletin 82/34**

(45) Publication of the grant of the patent:
**24.07.85 Bulletin 85/30**

(84) Designated Contracting States:
**BE DE FR GB NL**

(56) References cited:
**DE-C- 896 189**
**US-A-3 933 955**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Buurman, Cornelis
Badhuisweg 3
NL-1031 CM Amsterdam (NL)**
Inventor: **van der Most, Menno
Badhuisweg 3
NL-1031 CM Amsterdam (NL)**
Inventor: **Grondman, Alexander
Carel van Bylandtlaan 30
NL-2596 HR The Hague (NL)**

(74) Representative: **Aalbers, Onno et al
P.O. Box 302
NL-2501 CH The Hague (NL)**

Courier Press, Leamington Spa, England.

## Description

The invention relates to an apparatus for the production of globular silica particles of uniform shape, comprising at least one mixing tube, each mixing tube being provided with inlet means for an aqueous solution of an alkali metal silicate and an aqueous solution of an acid, respectively, and with an outlet for pouring out the hydrosol obtained by mixing the said solutions, means for converting the hydrosol, thus obtained, into droplets, which are subsequently gelled in a liquid not miscible with water.

Globular silica particles (spheres) can be applied on a large scale in several processes of the oil and petrochemical industry, for example as catalysts, catalyst carriers, absorbents, drying agents and ion exchangers, etc.

GB patent specification 1,525,386 discloses a way of preparing silica spheres by means of the well-known sol-gel-method. According to this method a silica hydrosol is prepared by mixing an aqueous solution of an alkali metal silicate with an acid in a mixing chamber mounted in any suitable way at the top of a vertically disposed column. The hydrosol thus obtained is converted into droplet-form and the droplets are gelled in a liquid, which is not miscible with water. An example of such a liquid is oil.

One of the large problems of such known preparation was to achieve proper mixing of the two feed streams in the mixing chamber, because incorrect mixing of the streams will produce inhomogeneous sphers which are mechanically weak, stick to the column wall and entrain oil.

It is therefore an object of the invention to provide a device, which is very suitable to produce silica spheres of uniform shape having a high bulk crushing strength and water resistivity.

Another object of the invention is providing silica spheres having a high mechanical strength and high pore volume.

The apparatus of the invention therefore is characterized by the distance between the said outlet and the inlet means next to the said outlet being 5—20 times the inner diameter of the said mixing tube.

Further, it can be remarked that U.S. patent specification 3,933,955 discloses a process for producing radio-isotope microspheres which are formed by the sol-gel process. In this process the sol-gel is fed with a flow of alcohol and a vertical sol-gel feed tube is used.

However, this said U.S. patent specification does not relate to the preparation of globular silica particles (spheres) having a high bulk crushing strength and water resistivity. Further, no particulars have been disclosed about the manner in which the sol-gel is mixed and formed.

The invention will now be described by way of example in more detail with reference to the accompanying drawings, in which:

Fig. 1 represents schematically a cross-section of an example of the apparatus of the invention, said apparatus being adapted for the preparation of globular particles.

Fig. 2 represents schematically a cross-section of another example of an apparatus for preparation of particles according to the invention.

Fig. 3 represents schematically a cross-section of still another example of an apparatus for preparation of particles according to the invention.

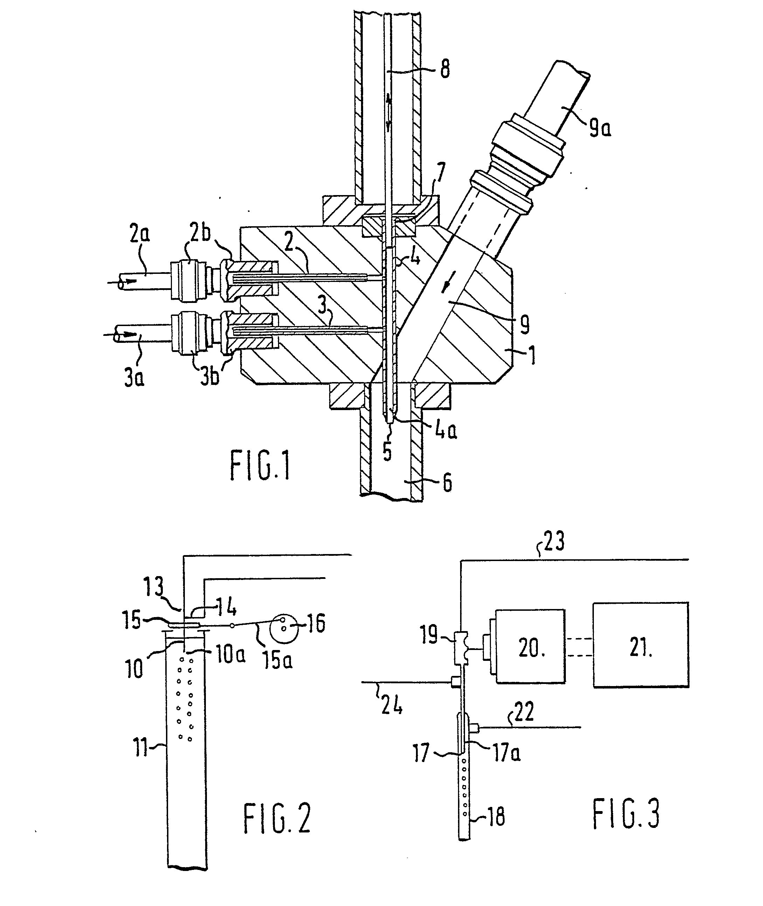

With reference now to Fig. 1 a housing 1 has been represented, comprising inlet means 2 and 3, for supply solutions (acid and silicate, respectively). The supply solutions are fed to the inlet means 2 and 3 through supply means 2a and 3a, respectively. Said supply means are connected to the inlet means 2 and 3 by any suitable means such as couplings 2b and 3b. Said inlet means are connected in any way suitable for the purpose to a mixing tube 4, constituting a mixing channel 4a, the outlet or nozzle 5 of which ends in a tube 6. The tube 6 consists of any material suitable for the purpose and is a part of a column of the set-up for preparation of particles (not shown, since known per se). Through the inlet 7 of the mixing tube 4 a needle 8 can be moved to the outlet 5. The said needle serves as a cleaning rod for the mixing channel 4a and can be moved in any way suitable for the purpose (not shown in detail). It will be clear to those skilled in the art that the said needle is not an essential part of the apparatus according to the invention. The distance between the outlet 5 of the channel 4a and the inlet means 3 next to the said outlet 5 is 5—20 times the inner diameter of the channel. The two solutions are mixed in the mixing channel 4a which gives a hydrosol. The said sol is poured out in a cocurrent stream 9 of a fluid, which is not miscible with water, for example oil. The said fluid serves as a driving fluid to entrain the obtained sol. In this example the oil flows from a supply means 9a through a channel 9, which has been provided in the housing 1. The supply means 9a is connected by any suitable means to the housing 1. In this way the sol which is prepared in the mixing channel 4a is converted into droplets. These droplets are gelling subsequently. The sol and the driving fluid should flow under laminar conditions.

In an advantageous embodiment of the invention the conversion of the sol into droplets can be improved by applying a vibration to the mixing tube 4 or a pulsation in the flow of at least one of the supply solutions. These embodiments will be described further in more detail with reference of Figs. 2 and 3. The said vibration at a certain frequency and amplitude gives a regular drop formation by breaking up the liquid jets. The drops solidify during settling in the oil phase.

According to a further advantageous embodiment of the invention the distance between the outlet 5 of the mixing tube 4 and the inlet means 3 next to the said outlet is 10—15 times the inner diameter of the mixing tube. The diameter of the mixing tubes may vary from 1—6 mm. The pulsation is 10—300 Hz.

According a further advantageous embodiment the diameter of the mixing tubes is 3 mm and the pulsation is 20—200 Hz.

In this way spheres having a diameter in the range of 2—7 mm could be obtained. It appeared that with a length within the limits above and cleaning the mixing tubes with needles one time in a period of 1—10 min continuous operation was possible.

With reference now to Fig. 2 a transversally vibrating nozzle tip immersed in an oil column 11 has been represented schematically. The nozzle 10a is the outlet of a mixing tube 10 which is provided with feed inlet means 13 and 14, respectively, and is mounted at the top of the column 11 at any suitable way and can be vibrated transversally at suitable frequencies, for example, up to 35 Hz by means of any suitable vibrating system (15, 15a, 16). Such a system may, for example, comprise a coupling rod 15a and an adjustable eccentric 16. Such systems as such are known to those skilled in the art and will not be described in detail.

The solutions through the inlet means 13 and 14 are fed from storage vessels (not shown) and metered via suitable devices such as calibrated rotameters and flow controllers such as needle valves (not shown). The nozzle tip 10a can be flushed with a suitable medium such as demineralized water to prevent blocking with gel when the process is stopped. The formation of drops at the nozzle tip could be observed by any means suitable for the purpose, known per se to those skilled in the art. An example of such a means is stroboscopic light (not shown). In this example the oil supply has not been represented. The obtained particles are received in a product receiver (not shown). Further suitable equipment such as circulation pumps, oil-fluid separators, etc. have not been shown for the sake of clarity. This equipment is known to those skilled in the art.

In Fig. 3 a set-up provided with a static mixing tube and pulsation or longitudinal vibration via one of the supply solutions has been represented schematically. The nozzle 17 is the outlet of the mixing channel 17a for the solutions. The solutions are fed to the said channel through supply lines 23 and 24. The nozzle 17 is mounted in a transparent tube 18 through which cocurently oil can be pumped through the line 22 from a suitable supply (not shown). The nozzle 17 is connected to a membrane 19 by any means suitable for the purpose. The membrane 19 is inserted in the supply line 23. The said supply line 23 originates from a storage vessel (not shown). The membrane may be moved longitudinally by a suitable electro-magnetic vibrator. The said vibrator 20 may be controlled by a suitable amplitude and frequency control unit 21.

It will be appreciated that any vibration system suitable for the purpose may be used, for example, electro-mechanical or purely mechanical systems.

Further the storage vessels may be pressurized with any suitable medium. It will also be clear that any number of mixing tubes suitable for the purpose may be used.

It will be clear for those skilled in the art that every mixing ratio of the feed compositions suitable for the purpose may be used.

It will be appreciated that aqueous solutions may be used as supply solutions. However, our invention is not restricted to the use of aqueous solutions. Any suitable solution for the purpose may be used.

Further it will be clear that the angle between inlet means and mixing tube is not necessarily 90°.

## Claims

1. An apparatus for the production of globular silica particles of uniform shape, comprising at least one mixing tube, each mixing tube being provided with inlet means for an aqueous solution of an alkali metal silicate and an aqueous solution of an acid, respectively, and with an outlet for pouring out the hydrosol obtained by mixing the said solutions, means for converting the hydrosol, thus obtained, into droplets, which are subsequently gelled in a liquid not miscible with water, characterized in that the distance between the said outlet and the inlet means next to the said outlet being 5—20 times the inner diameter of the said mixing tube.

2. The apparatus as claimed in claim 1, characterized by means for pulsation of the flow of at least one of the solutions.

3. The apparatus as claimed in claim 1 or 2, characterized by a longitudinally vibrating system.

4. The apparatus as claimed in any one of claims 1—3, characterized by a static mixing tube.

5. The apparatus as claimed in any one of claims 1—4, characterized by a mixing tube having a diameter of 1—6 mm.

6. The apparatus as claimed in any one of claims 2—5, characterized in that the pulsations are in the range of 10—300 Hz.

## Patentansprüche

1. Vorrichtung zum Erzeugen von rundkörnigen Silika-Teilchen gleichmäßiger Form mit zumindest einem Mischrohr, wobei jedes Mischrohr mit Einlaßeinrichtungen für eine wässrige Lösung eines Alkali-Metall-Silikates und für eine wässrige Lösung einer Säure sowie mit einem Auslaß zum Ausströmen des Hydrosols versehen ist, welches durch Mischung der genannten Lösungen erhalten wird, und mit Einrichtungen zum Umwandeln des so gewonnen Hydrosols in Tropfen, welche nachfolgend in einer nicht mit Wasser mischbaren Flüssigkeit geliert werden, dadurch gekennzeichnet, daß der Abstand zwischen dem genannten Auslaß und den zu dem Auslaß nächstliegenden Einlaß-Einrichtungen das 5—20 fache des Innendurchmessers des Mischrohres beträgt.

2. Vorrichtung nach Anspruch 1, dadurch gekennzeichnet, daß Einrichtungen zum Pulsieren der Strömung zumindest einer der Lösungen vorgesehen sind.

3. Vorrichtung nach einem der Ansprüche 1 oder 2, dadurch gekennzeichnet, daß eine Longitudinal-Vibrations-Einrichtung vorgesehen ist.

4. Vorrichtung nach einem der Ansprüche 1—3, dadurch gekennzeichnet, daß das Mischrohr statisch ist.

5. Vorrichtung nach einem der Ansprüche 1—4, dadurch gekennzeichnet, daß das Mischrohr einen Durchmesser von 1—6 mm aufweist.

6. Vorrichtung nach einem der Ansprüche 2—5, dadurch gekennzeichnet, daß die Pulsierung im Bereich von 10—300 Hz liegt.

## Revendications

1. Un dispositif pour la préparation de particules globulaires de silice d'une forme homogène, comprenant au moins un tube de mélange, chaque tube de mélange étant pourvu de moyens d'entrée pour une solution aqueuse d'un silicate de métal alcalin et une solution aqueuse d'un acide, respectivement, et d'une sortie pour écoulement de l'hydrosol obtenu par mélange de ces solutions, des moyens pour transformer l'hydrosol ainsi obtenu en gouttelettes, qui sont ensuite gélifiées dans un liquide non miscible avec l'eau, caractérisé en ce que la distance entre la sortie et le moyen d'entrée le plus proche de la sortie est de 5 à 20 fois le diamètre intérieur du tube de mélange.

2. Un dispositif selon la revendication 1, caractérisé par des moyens pour réaliser une pulsation du courant d'au moins une des solutions.

3. Un dispositif selon la revendication 1 ou 2, caractérisé par un système de vibration longitudinale.

4. Un dispositif selon l'une quelconque des revendications 1—3, caractérisé par un tube de mélange statique.

5. Un dispositif selon l'une quelconque des revendications 1—4, caractérisé par un tube de mélange ayant un diamètre de 1—6 mm.

6. Un dispositif selon l'une quelconque des revendications 2—5, caractérisé en ce que les pulsations sont comprises entre 10 et 300 Hz.

FIG.1

FIG.2

FIG.3